# EUROPEAN PATENT SPECIFICATION

(11) **EP 0 893 934 B1**
(45) Date of publication and mention of the grant of the patent: **21.01.2004**
(21) Application number: 97112915.0
(22) Date of filing: 26.07.1997
(51) Int. Cl.: H04Q 11/04

(54) **A device for simultaneous switching of different telecommunications signals**
Einrichtung zur gleichzeitigen Vermittlung von unterschiedlichen Fernmeldesignalen
Dispositif pour commuter simultanément différents signaux de télécommunications

(43) Date of publication of application: 27.01.1999
(73) Proprietor: Nokia Corporation, 02150 Espoo (FI)
(72) Inventor: Helenius, Tom, 02120 Espoo (FI)
(74) Representative: COHAUSZ & FLORACK

(56) References cited:
- WO-A-97/09827
- US-A- 5 410 343
- US-A- 5 594 491
- US-A- 5 613 190
- ANDERSEN T ET AL: "HDSL - WIRTSCHAFTLICHE LOSUNG ZUR STEIGERUNG DER BANDBREITE" TEC. DAS TECHNISCHE MAGAZIN VON ASCOM, no. 1, 1 January 1994, pages 36-42, XP000474682
- KHASNABISH B: "BROADBAND TO THE HOME (BTTH): ARCHITECTURES, ACCESS METHODS, AND THE APPETITE FOR IT" IEEE NETWORK: THE MAGAZINE OF COMPUTER COMMUNICATIONS, vol. 11, no. 1, January 1997, pages 58-69, XP000679058
- BALL L L: "RESIDENTIAL SERVICES ARCHITECTURE FOR THE INTERACTIVE DELIVERY OF INFORMATION AND VIDEO SERVICES" PROCEEDINGS OF MULTIMEDIA COMMUNICATIONS, 13 April 1993, pages 229-238, XP000608081

## Description

The present invention concerns a telecommunication system for providing multiple telecommunication services (ISDN, ADSL, POTS) to residential customers each of which being separately connected to access points in a central telecommunication office by single copper access wires.

Copper wires, mainly twisted wire pairs between the telephone central office and different end users of telecommunication services have more information capacity than that used for voice services. Several baseband and passband transmission systems, collectively referred to as xDSL, have been developed over the past decade that enable up to several megabits per second of data to be carried over telephone twisted pair loops, i.e. already in-place telephone-company copper cables. Twisted pair telephone wires cover the access to the telecommunication system of a large amount of customers worldwide. These twisted pair copper cables are used for the connection of different end users with a central office. The development of the new signal processing techniques was thus directed to the objective to use these in-place copper cables instead of substituting them by data transmission lines with a higher bandwidth (i.e. glas fibers). Organizing signals, e.g. into ATM (Asynchronous Transfer Mode) cells allows data, voice and video signals to be carried in a common xDSL payload.

The use of xDSL technology for high speed transmission on telephone twisted pairs has been discussed recently ("Systems Considerations for the Use of xDSL Technology for Data Access", George T. Hawley, IEEE Communications Magazine March 1997, pp. 56 to 60). xDSL signals are designed to maximize the rate of transmission of digital signals through subcategories of nonloaded twisted pairs, making use of bandwidths that can be greater than 1 MHz. There are several types of xDSL signal in commercial use or in trials today. Each signal type is implemented in circuitry with accompanying software, called a transceiver. The transceiver must be adapted to convert serial binary data streams into a form suitable for transmission through twisted wire pairs. The transceivers may also employ various signal processing, equalization, amplification, and shaping techniques to adapt transmission for physical attenuation and phase distortion impairments experienced by signals transmitted through twisted wire pairs.

The term xDSL is a generic term for a number of similar forms of digital subscriber line (DSL) technologies. The "x" in xDSL is actually filled in with a letter depending on the technology implemented. The major types of xDSL categories are:
- High-bit-rate Digital Subscriber Line (HDSL),
- Asymmetric Digital Subscriber Line (ASDL).

While the HDSL is a symmetrical data transmission technology that was first extensively applied for transmitting 1,544 Mb/s signals through two pairs of wire, HDSL is also being modified to work over a single copper telephone line to provide direct premises connections between a customer and its serving central office with a speed of 384 Kbps or 768 Kbps.

Alternatively, the ADSL, Asymmetric Digital Subscriber Line has been developed with respect to the demand for multimegabit data transports to allow a high speed Internet access and the ability to purchase video movies on demand. Both of these applications are asymmetric in nature, demanding a multimegabit downstream delivery to the consumer, but only a small upstream link into the network to transmit basic commands or the occasional email. ADSL offers downstream rates in excess of 6 Mbps and simultaneous duplex transmissions of 640 Kbps over copper lines.

In a transceiver adapted to ADSL technology comprised at each end of a twisted pair telephone line, three information channels are created: a high speed downstream channel, a medium speed duplex channel and a so called POTS (Plain Old Telephone Service) channel, the latter being split off from the digital modem by filters. Thus the voice signal is isolated in order to be independent from the power source for the modem. This guarantees uninterrupted POTS connections, even if the ADSL connection or outside power fails.

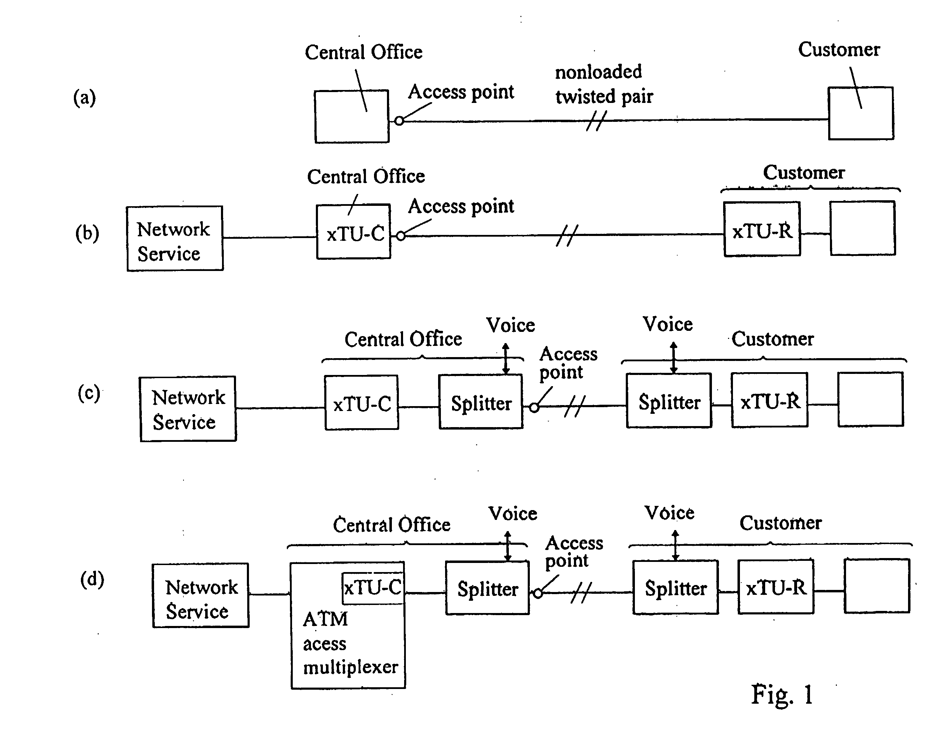

Fig. 1a to 1d illustrate different types of known connection types for a copper wire, e.g. twisted pair, connection between a central office and a customer.

Fig. 1a shows the simple case in which the customer is connected to the central office by a nonloaded twisted pair line.

Fig. lb shows an xDSL connection in its simplest form consisting of two transceivers TU-C, TU-R, one at each end of the twisted pair. This configuration is typical of many early HDSL applications.

Fig. lc shows the typical configuration for the earliest ADSL application, with ADSL transceivers at each end of a line connected through a splitter/filter in order to be able to share the line with a voice telephone service. The splitter/filter circuit may be active or passive, although passive is preferred as being a lesser reliability risk to the lifeline telephone service sharing the twisted pair.

Fig. 1d is a more illustrative example of the emerging ADSL access systems with the ADSL central office transceivers integrated into an asynchronous transfer mode (ATM) access multiplexer.

In a telecommunication system of the kind discussed above the access point of the requested telecommunication service, i.e. ISDN or ADSL, is permanently connected to the access wire of the respective customer. If a customer wishs to change the service, the permanent connection in the central office must be disabled and substituted by the permanent connection for the new service.

A telecommunication system similar to the one represented in figure 1d is known for example from US patent US 5,410,343, which relates to video-on-demand services using a public switched telephone network. International patent application WO 97/09827 further describes a distribution system enabling video and interactive services to be distributed over a public switched telephone network, in which an ADSL transceiver of an ADSL exchange unit supports in addition the use of ISDN channels.

It is the object of the present invention to improve the known telecommunication system in order to make it easier to change from one telecommunication service to another for the end customer.

This object is achieved by modifying a known telecommunication system, in which access points correspond respectively to the telecommunication service required by the customer, by an analog signal switching device for selectively allocating different telecommunication services access points to the customer access wire. The switching device comprises a relay switching matrix which is controlled by the telecommunication network management.

The device according to the present invention allows to switch the access wire originating from the device of the end user (customer) of the telecommunication service to the appropriate, i.e. user selected service access point in the telecommunications network. This allows for a flexible provisioning of different telecommunication services, like POTS, ISDN, ADSL to the end user by allowing a data transmission via the in-place telephone cable, e.g. twisted pair. If the customer wants to use a specific service, e.g. ADSL, the device according to the invention switches the ADSL signal to the access point of the ADSL service network. If the customer wants to change from one service to another, the device switches the signal to another destination, namely the access point of the corresponding service.

According to a preferred embodiment of the present invention the allocation of the service access points to several end users is based on the principle of dynamic, statistical on demand allocation. This means that the signal of the customer is able to activate the certain required service and that the corresponding way is connected to the selected access-point. This allows optimal utilization of the network recources because the service access points are allocated in a statistical manner. E.g., 100 service access points may serve e.g. 1000 end users so that the blocking probability due to insufficient resources is very low.

The present invention is illustrated from the following drawings:
Fig. 1 shows a sketch illustrating twisted wire pair connections known from prior art
Fig. 2 shows a first embodiment according to the present invention;
Fig. 3 shows a second embodiment according to the present invention.

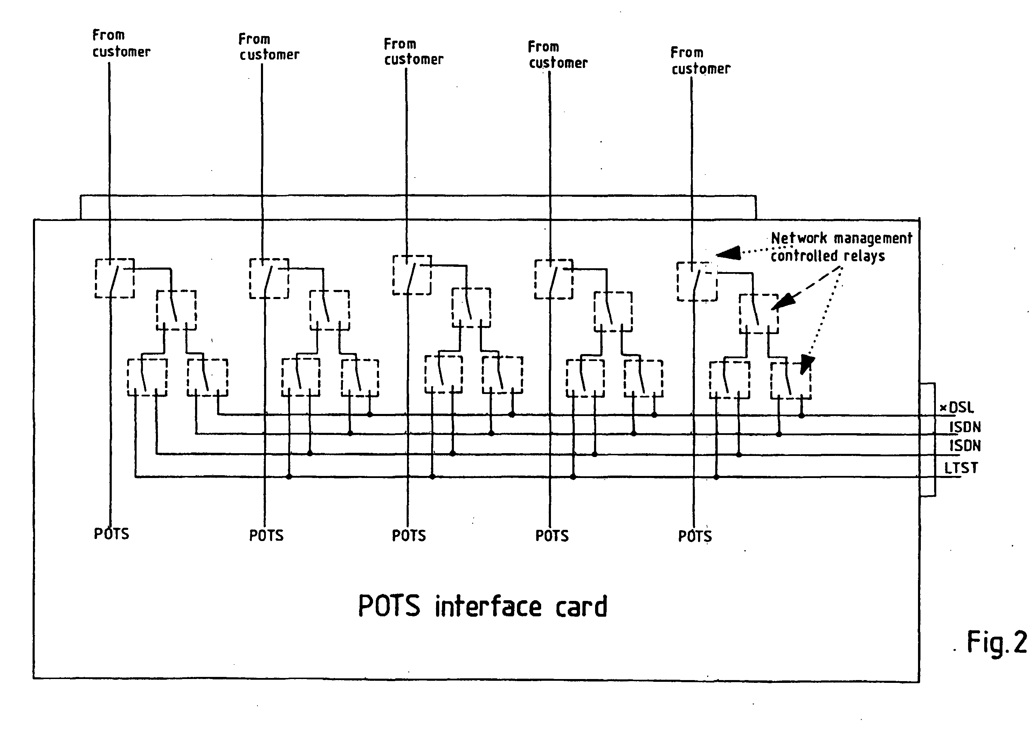

Referring to Fig. 2, a variety of customers is connected by twisted pair copper cables to a POTS interface card being part of the central office in a telecommunication system.

At another input of the central office, different telecommunication services, like xDSL, ISDN and POTS are offered to the customer, while xDSL means ADSL or HDSL services. The voice transmission line (POTS, Plain Old Telephone Service) is also comprised in the central office.

As can be seen in Fig. 2, for each customer line, network management controlled relays are comprised in order to allocate for each customer the desired service.

Starting from the access wire of a customer, the first switch of the relay matrix switches between the POTS service and the different other broadband services (ADSL, ISDN). The relays following in the hierarchy, allocate the respective broadband service to the customer.

Upon the selection of the respective customer, the relays may be controlled separately by the network management thus allowing for the system to freely allocate to each customer the required telecommunication service.

If the end user (customer) wants to use another service, the relays are switched accordingly and a connection to the access point of the corresponding service is achieved.

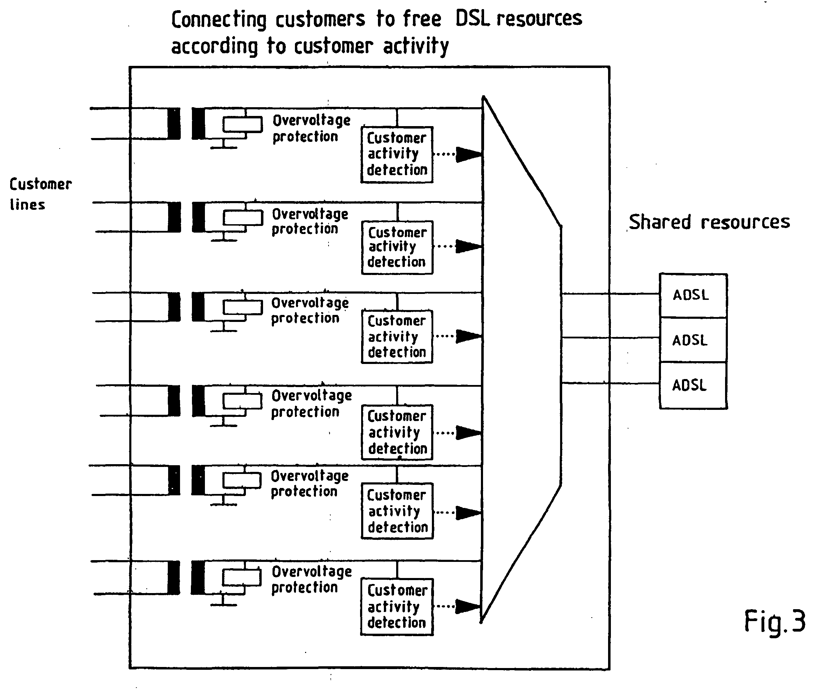

Fig. 3 shows a second embodiment of the present invention. This embodiment refers to the case, that different customers connected by separate twisted pair access wires to the central office want to share the same telecommunication service, namely ADSL.

In this case all separate customer lines are connected in parallel with a switch matrix which allocates the ADSL shared recources to the customer. The connection to the free ADSL recources is achieved according to the "activity" of the customer.

## Claims

1. Telecommunication system for providing multiple telecommunication services, e.g. ISDN, ADSL, POTS, to residential customers each of which being separately connected to access points in a central telecommunication office by single copper access wires, **characterized in that** the access points correspond respectively to the telecommunication service required by the customer, and that an analog signal switching device is comprised for selectively allocating telecommunication services access points corresponding to customer-selected services to the respective customer access wires, wherein the switching device comprises a relay switching matrix, the relays, e.g. Network management controlled relays, being controlled by telecommunication network management.

2. Telecommunication system according to claim 1, **characterized in that** the allocation of the service access points to different customers is based on statistical allocation.

3. Telecommunication system according to claim 2, **characterized in that** the allocation of the service access points to different customers is based on statistical dynamic on demand allocation.

## Patentansprüche

1. Telekommunikationssystem zum Bereitstellen mehrfacher Telekommunikationsdienste, z.B. ISDN, ADSL, POTS, für Privatteilnehmer, die jeweils über einzelne Kupferzugangsleitungen separat an Zugangspunkte in einer Telekommunikationszentrale angeschlossen sind, **dadurch gekennzeichnet, dass** die Zugangspunkte jeweils dem Telekommunikationsdienst entsprechen, der vom Teilnehmer angefordert ist, und dass eine analoge Signalvermittlungsvorrichtung zum selektiven Zuteilen von Telekommunikationsdienstzugangspunkten, die vom Teilnehmer ausgewählten Diensten entsprechen, an die jeweiligen Teilnehmerzugangsleitungen umfasst ist, wobei die Vermittlungsvorrichtung eine Relaisumschaltmatrix umfasst, wobei die Relais, z.B. durch Netzmanagement gesteuerte Relais, durch das Telekommunikationsnetzmanagement gesteuert sind.

2. Telekommunikationssystem nach Anspruch 1, **dadurch gekennzeichnet, dass** die Zuteilung der Dienstzugangspunkte an verschiedene Teilnehmer auf statistische Zuteilung gestützt ist.

3. Telekommunikationssystem nach Anspruch 2, **dadurch gekennzeichnet, dass** die Zuteilung der Dienstzugangspunkte an verschiedene Teilnehmer auf statistische, dynamische Zuteilung auf Abruf gestützt ist.

## Revendications

1. Système de télécommunication pour fournir de multiples services de télécommunication, par exemple ISDN, ADSL, PTO, à des clients résidentiels, chacun d'eux étant connecté séparément à des points d'accès dans un central de télécommunication par des fils d'accès en cuivre uniques, **caractérisé en ce que** les points d'accès correspondent respectivement au service de télécommunication exigé par le client, et **en ce qu'**un dispositif de commutation de signal analogique est prévu pour attribuer de manière sélective des points d'accès aux services de télécommunication correspondant à des services sélectionnés par le client aux fils d'accès des clients respectifs, dans lequel le dispositif de commutation comprend une matrice de commutation à relais, les relais, par exemple, des relais contrôlés par une gestion de réseau, étant contrôlés par la gestion de réseau de télécommunication.

2. Système de télécommunication selon la revendication 1, **caractérisé en ce que** l'attribution des points d'accès aux services à différents clients est basée sur une attribution statistique.

3. Système de télécommunication selon la revendication 2, **caractérisé en ce que** l'attribution des points d'accès aux services à différents clients est basée sur une attribution dynamique statistique à la demande.
